Europäisches Patentamt

European Patent Office

Office européen des brevets

(19)

(11) Veröffentlichungsnummer: **0 211 875**
**B1**

(12) # EUROPÄISCHE PATENTSCHRIFT

(45) Veröffentlichungstag der Patentschrift:
04.10.89

(51) Int. Cl.⁴: **G 11 B 27/17, G 11 B 27/34**

(21) Anmeldenummer: **86901057.9**

(22) Anmeldetag: **24.01.86**

(86) Internationale Anmeldenummer:
**PCT/EP 86/00030**

(87) Internationale Veröffentlichungsnummer:
**WO 86/04722 (14.08.86 Gazette 86/18)**

(54) **VERFAHREN ZUR ERMITTLUNG DER ABGELAUFENEN UND/ODER NOCH ZUR VERFÜGUNG STEHENDEN SPIELZEIT EINES MAGNETBANDES.**

(30) Priorität: **06.02.85 DE 3504311**

(43) Veröffentlichungstag der Anmeldung:
**04.03.87 Patentblatt 87/10**

(45) Bekanntmachung des Hinweises auf die Patenterteilung:
**04.10.89 Patentblatt 89/40**

(84) Benannte Vertragsstaaten:
**AT BE CH DE FR GB IT LI LU NL SE**

(56) Entgegenhaltungen:
**WO-A-79/00352**
**BE-A-886 249**
**DE-A-2 746 613**
**DE-A-3 318 324**
**FR-A-2 425 699**
**US-A-4 479 159**

**Patents Absracts of Japan, Band 8, Nr. 86, (P-269)(1523) 19 April 1984 & JP - A - 592279**
**Patents Abstract of Japan, Band 6, Nr. 241, (P-158)(1119) 30 November 1982 & JP - A - 57138074**

(73) Patentinhaber: **Deutsche Thomson- Brandt GmbH, Hermann- Schwer- Strasse 3 Postfach 1307, D-7730 Villingen- Schwenningen (DE)**

(72) Erfinder: **KAADEN, Jürgen, Im Tannhörnle 10, D-7730 Villingen- Schwenningen (DE)**

**Beschreibung**

Die Erfindung betrifft ein Verfahren zur Ermittlung der abgelaufenen und/oder noch zur Verfügung stehenden Spielzeit eines Magnetbandes gemäß dem Oberbegriff des Anspruchs 1. Ein derartiges Verfahren ist aus DE-A-2 746 613 bekannt.

Des weiteren ist es aus der US-PS-4 280 159 bekannt, die Restbandmenge eines auf einer Abwickelspule eines Magnetbandgerätes noch zur Verfügung stehenden Magnetbandes zu ermitteln. Hierbei kann dies jedoch nur bei konstanter Vorschubgeschwindigkeit des Aufzeichnungsträgers erfolgen, wobei die Dicke des Aufzeichnungsträgers keine Berücksichtigung findet. Hierdurch ergeben sich Fehler in der Anzeige, deren Ungenauigkeit unbefriedigend ist.

Bei VHS-Geräten ist es bekannt, die noch zur Verfügung stehende Spielzeit anzuzeigen. Auch hier geht dies nur bei konstanter gleicher Vorschubgeschwindigkeit des Aufzeichnungsträgers. Die Anzeige wird bei schnellen Umspusvorgängen abgeschaltet, da sie zu ungenau und deshalb wertlos ist.

Auch bei Videomagnetbandgeräten des Typs Video 2000 ist es bekannt, aus dem Verhältnis der Bandwickeldurchmesser die aktuelle Bandstelle zu ermitteln, hierbei muß jedoch zunächst der gesamte Bandvorrat des in einer Kassette gelagerten Aufzeichnungsträgers bekannt sein. Hierzu muß die Kassette entsprechend codiert werden oder es muß eine manuelle Eingabe des Vorrats erfolgen, was oftmals nicht möglich ist, weil auf dem Kassettengehäuse die Gesamtlänge des Aufzeichnungsträgers nicht vermerkt ist. Ausserdem ist manuelle Eingabe umständlich und erfordert eine zusätzliche Bedienung für den Benutzer eines solchen Aufzeichnungsgerätes.

In der DE-OS-2 746 613 ist ein Verfahren zur Bestimmung des Vorrats an Magnetband beschrieben. Hierbei wird sowohl von der Abwickelseite wie von der Aufwickelseite während des Umspulens je ein Signal zur Drehzahlerfassung abgeleitet, wobei zwei in gewissen Zeitständen vorgenommene Frequenzmessungen ausgewertet werden. Bei geringer Bandgeschwindigkeit wird dabei der zeitliche Abstand der Messungen groß und bei hoher Bandgeschwindigkeit wird der zeitliche Abstand der Messungen klein gewählt. Während bei geringer Bandgeschwindigkeit der Vorrat durch eine Digitalrechenoperation ermittelt wird, ergibt sich der Vorrat bei hoher Bandgeschwindigkeit durch eine Analogrechenoperation. Auch hoher Bandgeschwindigkeit ist es aber wichtig, den Vorrat minutengenau in Realzeit anzuzeigen. Dazu ist jedoch eine Analogrechenoperation nicht geeignet, weil sie zu ungenau ist.

Der Erfindung liegt die Aufgabe zugrunde, diese Nachteile zu vermeiden und ein Verfahren anzugeben, unabhängig von der Vorschubgeschwindigkeit, d.h. bei normalem Wiedergabe- und Aufnahmebetrieb wie auch bei schnellem Suchlauf oder Umspulbetrieb eine minutengenaue Anzeige der abgelaufenen Spielzeit, der Restspielzeit und bei Bedarf die Summe der beiden Teilinformationen jederzeit abrufbar zu halten. Diese Aufgabe wird durch die im Patentanspruch gekennzeichnete Erfindung gelöst. Sie besitzt den Vorteil, daß sie gut reproduzierbare Anzeigen der Spielzeiten liefert, da sie nach nur einer einmaligen Zeitmessung im normalen Betrieb einen aktuellen Windungwert ermittelt, von welchem ab unabhängig von der Wickelgeschwindigkeit lediglich ein Impuls pro Umdrehung registriert wird, der zum einmalig gemessenen und errechneten Wert hinzuaddiert oder von diesem subtrahiert wird. Die Genauigkeit der Zählung ist unabhängig von der Drehzahl der Wickel.

Nachstehend wird die Erfindung mit Hilfe der Zeichnung erläutert.

Figur 1 zeigt ein Blockschaltbild, um das Verfahren durchzuführen;
Figur 2 zeigt einen Ausschnitt der Figur 1;
Figur 3 zeigt Impulsdiagramme zur Erläuterung des Verfahrens.

Zunächst ist es erforderlich, daß die Dicke des Aufzeichnungsträgers ermittelt wird. Dies kann z. B. durch das in der Patentanmeldung P- 3 411 535.8 angegebene Verfahren geschehen. Nach Feststellung des Dorndurchmessers Do der verwendeten Kassette kann die Umdrehungszeit t einer Wickeldornumdrehung gemessen werden. Diese Zeit ändert sich von Windung n zu Windung n + 1, da die Umdrehungszeit bei größeren Durchmessern des Wickels bei konstanter Vorschubgeschwindigkeit des Aufzeichnungsträgers größer wird.

Der Dorndurchmesser Do kann auf folgende Weise festgestellt werden. Nach Ermittlung der Banddicke d werden die Zeiten einer vollen Umdrehung der beiden Bandwickel gemessen und addiert. Dieser Zeitwert wird mit einer Vergleichstabelle in Relation gebracht. Dabei wird die Tatsache ausgenutzt, daß es Bänder mit einer Dicke d = 16 µm und d = 20 µm gibt. Die verschiedenen Kassettentypen sind nach folgender Tabelle genormt:

| Kassette | d(µm) | Do(mm) |
|----------|-------|--------|
| E30 | 20 | 62 |
| E60 | 20 | 62 |
| E90 | 20 | 62 |
| E120 | 20 | 26 |
| E180 | 20 | 26 |
| E240 | 16 | 26 |

Wurde zum Beispiel eine Dicke d = 16 µm ermittelt, ergibt sich von selbst ein Dorndurchmesser Do von 26 mm.

Bei einer Banddicke von d = 20 µm gibt es Kassetten mit zwei verschieden großen Dorndurchmessern Do. Zur Unterscheidung dient hierbei die Zeitmessung. Die Kassetten mit dem

2

großen Dorndurchmesser Do = 62 mm liefern einen derart großen Zeitunterschied zu den Kassetten mit einem Dorndurchmesser Do = 26 mm, daß durch einen Schwellwertvergleich der Zeiten mühelos der Dorndurchmesser, bestimmbar ist.

Die aufgewickelte Länge der ersten Windung n1, d.h. die Windung, die direkt am Dorn anliegt beträgt $l1 = \pi(Do + 2d)$, wobei für d die Dicke des Aufzeichnungsträgers einzusetzen ist. Die nächsten Windungen n2 und n3 besitzen folgerichtig die Längen

$$l_2 = \pi(Do + 4d) \text{ und} \qquad (1)$$
$$l_3 = \pi(Do + 6d)... l_n = \pi(Do + 2n\,d).$$

Die gesamte aufgewickelte Länge $L_n$ bis zur Windung n ist die Summe aus den oben angeführten Einzellängen $l_n$.

$$L_n = \sum_1^n l_n = n\pi[Do + (1+n)d] \qquad (2)$$

Wird dieser Ausdruck durch die konstante genormte Vorschubgeschwindigkeit v geteilt (z. B. v = 23,39 mm/sec.), so ergibt sich ein Zeitwert T, der die abgelaufene Zeit darstellt. Eliminiert man n aus der Beziehung (2), erhält man einen Wert für die auf- bzw. abgewickelten Windungen n.

$$n = \sqrt{} = (1/2 + Do/2d)^2 + 60vT/\pi d - 1/2 - Do/2d \qquad (3)$$

wobei für T die abgelaufene bzw. noch zur Verfügung stehende Spielzeit in Minuten und für v die gewählte Vorschubgeschwindigkeit in mm/sec. und für DO der verwendete Wickeldorndurchmesser in mm und für d die Banddicke in mm einzusetzen ist. Mit den Beziehungen (2) und (3) läßt sich die abgelaufene und noch zur Verfügung stehende Zeit minutengenau ermitteln.

Die Zeit für eine Umdrehung des Wickeldorns ändert sich von Windung zu Windung, d.h. in Abhängigkeit von n und errechnet sich zu

$$t_n = \frac{l_n}{v} = \frac{\pi(Do + 2nd)}{v} \qquad (4)$$

hieraus ergibt sich ein Windungswert n der auf der Spule befindlichen Windungen

$$n = \frac{vt_n - \pi Do}{2\pi d} \qquad (5)$$

Setzt man (5) in (3) ein, erhält man den Zeitwert T in Minuten des auf der Spule aufgewickelten Magnetbandes d.h. des auf der Abwickelspule noch zur Verfügung stehenden Magnetbandes bzw. des auf der Aufwickelspule abgespielten Magnetbandes.

$$T = \frac{(vt_n + \pi d)^2 - \pi^2(Do + d)^2}{240\,\pi dv} \qquad (6)$$

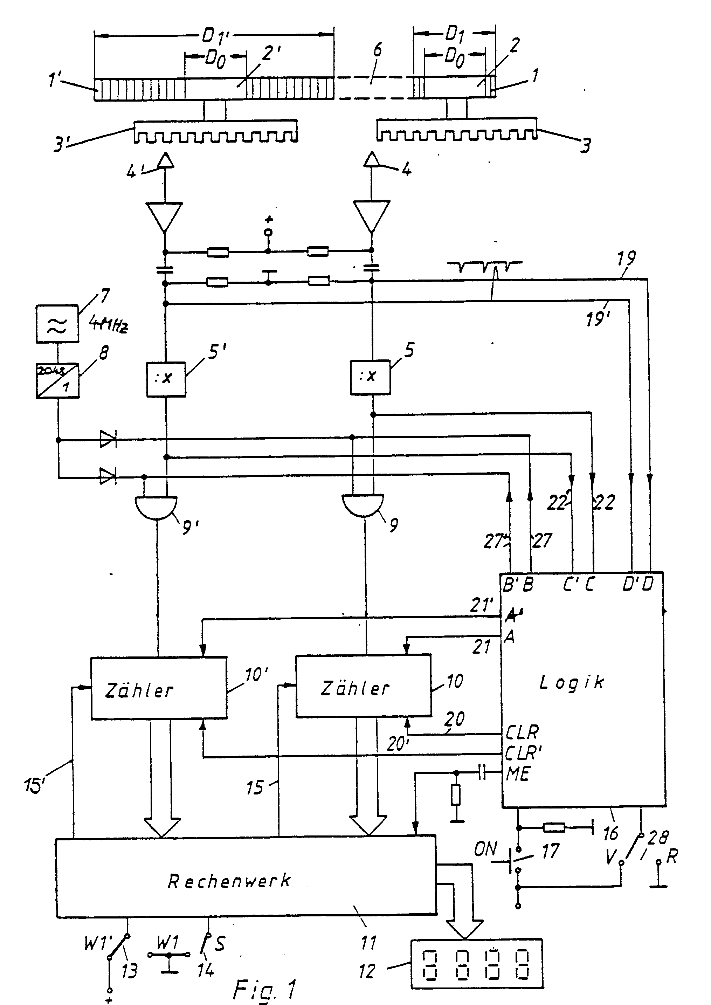

In der Figur 1 ist eine Kassette angedeutet, die eine Abwickelspule 1' und eine Aufwickelspule 1 besitzt, die auf den Dornen 2' und 2 aufgewickelt sind. Die Dornen haben den Durchmesser Do und die Wickel 1 und 1' die sich von Umdrehung zu Umdrehung ändernden Durchmesser D1 und D1'. Mit den Dornen 2 und 2' starr verbunden sind Geber 3 und 3'. Diese Geber besitzen z. B. x Zähne, so daß Fühler 4 und 4' pro Umdrehung x Impulse abgeben. Diese Impulse gehen ab Teilerstufen 5 und 5', welche die Eingangsimpulse durch einen der Anzahl der Zähne der Geber 3 und 3' entsprechenden Faktor x teilen, so daß pro Umdrehung am Ausgang der Teilerstufen 5 und 5' ein Impuls entsteht. Zunächst wird die Zeit gemessen, die jeder Wickel für eine Umdrehung benötigt. Der Wickel 1 mit dem kleineren Durchmesser D1 wird sich bei konstanter Vorschubgeschwindigkeit des Magnetbandes 6 schneller drehen als der Wickel 1' mit dem größeren Durchmesser D1'. Zur Zeitmessung werden Impulse aus einem Oszillator 7 gezählt, die über eine Teilerstufe 8 an Tore 9 und 9' gelangen. Die in den Zählern 10 und 10' gezählten Impulse werden als Zählerstand Z und Z' in ein Rechenwerk 11 gegeben, welches aus den Zählerständen und der gegebenen Periodendauer der dem Teiler 8 entnommenen Impulsfolge die Zeiten t und t' der Umdrehung der Wickel ermittelt. Aus den errechneten Zeiten können anschließend nach oben angegebener Beziehung (5) die aktuellen auf den Dornen befindlichen Windungen n bzw. n' ermittelt werden, mit denen die Zähler 10 und 10' über Leitungen 15 und 15' geladen werden. Nach Ende dieser Zeitmessung werden die Zähler 10 und 10' als Vor- bzw. Rückwärtszähler umgeschaltet, je nach Laufrichtung des Magnetbandes 6. Im Beispiel wird der Wickel 1' abgewickelt und der Wickel 1 aufgewickelt, so daß von dem ermittelten Zählerstand pro Umdrehung der Wickel 1 und 1' der Zähler 10 um 1 hochzählt und der Zähler 10' um 1 runterzählt. Die Zählerstände, die jeweils einer bestimmten Windungszahl entsprechen, sind in einem Festspeicher des Rechenwerks derart abgelegt, daß zu einem bestimmten Minutenwert der entsprechende Windungswert gehört. Die Zählerstände werden fortlaufend mit den korrespondierenden Minutenwerten verglichen und in einer Anzeige 12 wiedergegeben. Je nach Stellung eines Vorwahlschalters 13 kann die abgelaufene Zeit oder die noch zur Verfügung stehende Zeit angezeigt werden. Mit einem Schalter 14 kann auch die Summe aus den beiden Zeiten angezeigt werden. Aus der Differenz der Zeit und der abgelaufenen bzw. Restzeit kann jeweils die andere errechnet und zur Anzeige gebracht werden.

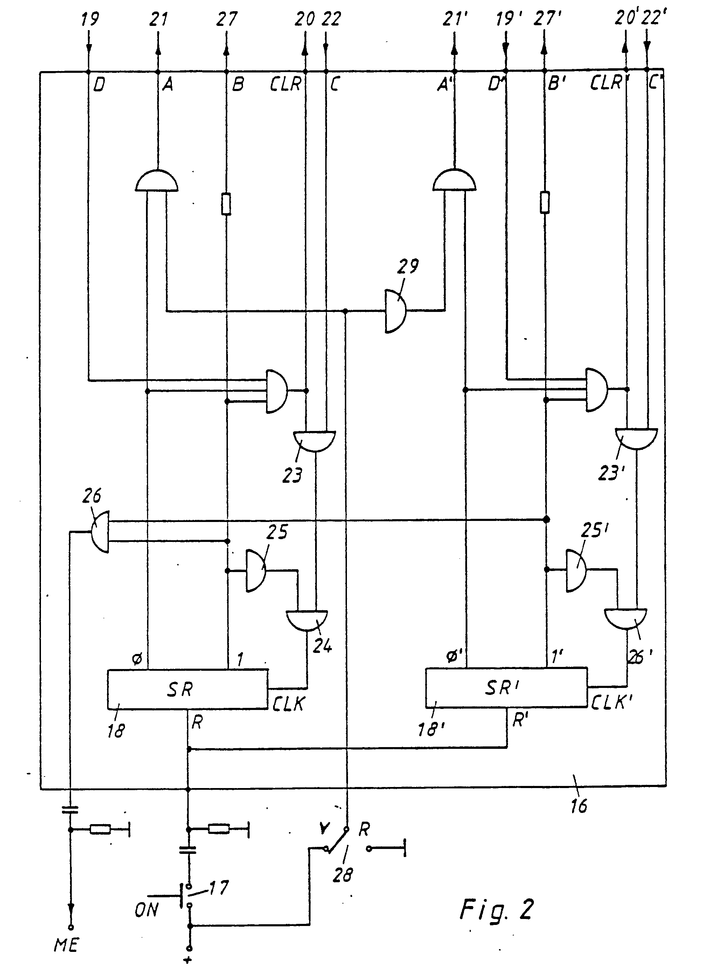

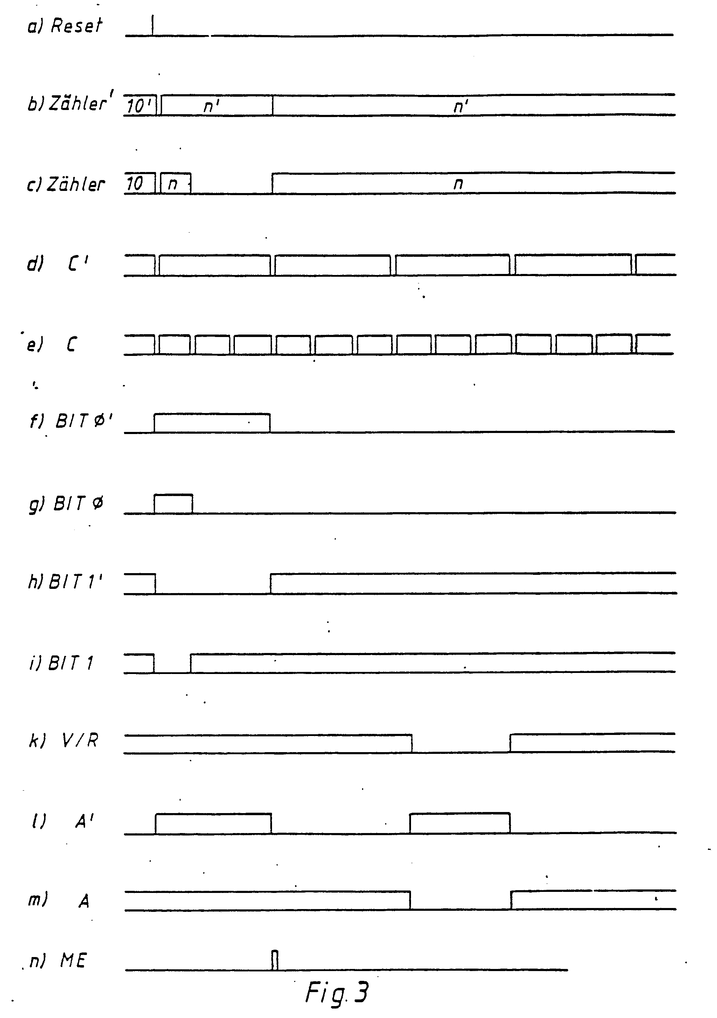

Zur Steuerung der Vorgänge dient eine Logikschaltung 16, welche nachstehend mit Hilfe der Figur 2 in Verbindung mit Impulsdiagrammen nach Figur 3 erläutert wird. Zu Beginn der Messung wird ein Schalter 17 betätigt, der einen Reset-Impuls (Figur 3a) an Schieberegister 18 und 18' gibt. Auf der Leitung 19, 19' bei D, D' kommen negativ gerichtete Impulsflanken im Abstand 1/x einer vollen Umdrehung an, wodurch am Ausgang CLR und CLR' Impulseauf den Leitungen 20 und 20' entstehen, die die Zähler 10 und 10' auf Null setzen (Figur 3b, c). Die BIT „∅"-Ausgänge der Schieberegister 18 und 18' gehen auf 1 (Figur 3f, g) und schalten die Zähler 10 und 10' auf Vorwärtszählung über die Leitungen 21 und 21'. Nun werden über die Und-Gatter 9 und 9' Impulse aus dem Teiler 8 eingezählt bis jeder Wickel 1 und 1' eine volle Umdrehung gemacht hat, d.h. bis über die Leitungen 22 und 22' ein Impuls ankommt. Diese Impulse setzen über Gatter 23, 23', 24 und 24' die Schieberegister mit ihren BIT „1"-Ausgängen auf 1 und werden über Gatter 25, 25', 24 und 24' für weitere Impulse gesperrt. Sind beide BIT „1"-Ausgänge auf 1 gesetzt (Figur 3h, i), wird über ein Gatter 26 ein Messung-Ende-Signal ME an das Rechenwerk 11 abgegeben (Figur 3n). Von nun ab sind die Gatter 9 und 9' über Leitungen 27 und 27' für Impulse aus den Teilern 5 und 5' geöffnet und geben an die Zähler 10 und 10' pro Umdrehung der Wickel 1 und 1' einen Impuls ab (Figur 3d, e). Ab diesem Zeitpunkt wird der Zähler für den sich jeweils abwickelnden Wickel auf Rückwärtszählung gesetzt (Figur 3l). Beim Umsteuern der Wickelrichtung (Figur 3i, k, m) werden die Zähler 10, 10' automatisch auf die andere Zählrichtung umgeschaltet über den Schalter 28 und das Gatter 29.

## Patentansprüche

1. Verfahren zur Ermittlung der abgelaufenen und/oder noch zur Verfügung stehenden Spielzeit eines Magnetbandes, welches von einer Abwickelspule auf eine Aufwickelspule umgewickelt wird und dessen Dicke sowie der Wickeldorndurchmesser bestimmt worden sind unter Verwendung eines Rechenwerkes zur Ermitteung der Zahl der auf einem Wickeldorn befindlichen Windungen des Magnetbandes nach einer Messung der Zeit einer Umdrehung eines Wickeldornes,

dadurch gekennzeichnet, daß die nach einer Umdrehung des Wickeldornes mit bekannter Bandgeschwindigkeit vom Rechenwerk ermittelte Windungszahl in einem Zähler abgespeichert wird, und daß pro nachfolgenden Umdrehungen des Wickeldornes der Zähler um eine Zähleinheit weitergeschaltet wird, und daß eine Vergleichseinrichtung vorgesehen ist, die den jeweiligen Zählerstand mit im Rechenwerk abgespeicherten Windungszahlen vergleicht, wobei die abgespeicherten Windungszahlen gleichen zeitlichen Intervallen entsprechen und daß bei Übereinstimmung des Zählerstandes mit einer abgespeicherten Windungszahl der dieser entsprechende Zeitwert mit Hilfe einer Anzeigevorrichtung angezeigt wird.

2. Verfahren nach Anspruch 1, dadurch gekennzeichnet, daß sowohl für die Abwickelseite als auch für die Aufwickelseite des Magnetbandes je ein Zähler und ein Vergleicher vorgesehen sind.

## Claims

1. A method of determining the expired and/or still available playing time of a magnetic tape which is rewound from a feed reel onto a take-up reel and the thickness of which as well as the hub diameter have been determined while using an arithmetic unit for the determination of the number of turns of the magnetic tape loacted on a hub following a measurement of the time of one revolution of a hub, characterized in that the number of turns determined by the arithmetic unit, after one revolution of the hub with known tape speed, is stored in a counter, and in that for successive revolutions of the hub the counter is stepped by one, and in that a comparing device is provided which compares the current count with the numbers of turns stored in the arithmetic unit, the stored numbers of turns corresponding to equal intervals of time, and in that, when the count agrees with a stored number of turns, the corresponding time value is displayed with the aid of a display device.

2. A method according to claim 1, characterised in that a respective counter and comparator are provided for both the feed side and for the take-up side of the magnetic tape.

## Revendications

1. Procédé pour déterminer la durée d'écoute, passée et/ou encore disponible, d'une bande magnétique, qui est déroulée d'une bobine débitrice sur une bobine réceptrice, et dont l'épaisseur ainsi que le diamètre du mandrin d'enroulement ont été déterminés à l'aide d'un calculateur calculant le nombre de spires de la bandage magnétique enroulées sur un mandrin par mesure du temps mis par le mandrin pour effectuer un tour, caractérisé par le fait que le nombre de spires calculé par le calculateur après un tour effectué par le mandrin à vitesse connue est mémorise dans un compteur, que le compteur est incrémenté d'une unité à chaque tour subséquent du mandrin, qu'il est prévu un comparateur comparant l'état courant du compteur au nombre de spires mémorisé dans le calculateur, les nombres de spires mémorisés correspondant à des intervalles de temps égaux, et que lorsqu'il y à égalité de l'état du compteur avec un nombre de spires mémorisé, le laps de temps qui lui correspond est affiché sur un dispositif de visualisation.

2. Procédé selon la revendication 1, caractérisé par le fait que l'on associé au côté enroulement et au côté déroulement de la bande magnétique un compteur et un comparateur.

Fig. 1

Fig. 2

a) Reset

b) Zähler' $\overline{10'}$ n' n'

c) Zähler $\overline{10}$ $\boxed{n}$ n

d) C'

e) C

f) BIT ∅'

g) BIT ∅

h) BIT 1'

i) BIT 1

k) V/R

l) A'

m) A

n) ME

Fig. 3